# EUROPEAN PATENT APPLICATION

(11) **EP 4 090 080 A1**
(43) Date of publication of application: **16.11.2022**
(21) Application number: 20911805.8
(22) Date of filing: 27.12.2020
(51) Int. Cl.: H04W 48/08

(54) **INFORMATION TRANSMISSION METHOD AND DEVICE**

(30) Priority: 06.01.2020 CN 202010010740; 07.01.2020 CN 202010014283
(71) Applicant: Datang Mobile Communications Equipment Co., Ltd., Beijing 100085 (CN)
(72) Inventor: BAO, Chenxi, Beijing 100085 (CN); WANG, Hucheng, Beijing 100085 (CN); AI, Ming, Beijing 100085 (CN)
(74) Representative: Nony
(86) International application number: PCT/CN2020/139784
(87) International publication number: WO 2021/139546

(57) **Abstract**

Disclosed are an information transmission method and device, used for avoiding paging of a service network of a universal subscriber identity module (USIM) when a multiple-USIM terminal leave the service network, thereby saving network resources. The method provided in the present application comprises: when the multiple-USIM terminal needs to leave the service network of a USIM, sending to a network side an instruction for entering a Mobile Initiated Connection Only (MICO) mode or a Power Saving Mode (PSM); and upon the receipt of a confirmation message from the network side in response to the instruction, leaving the service network of the USIM.

## Description

### Cross-Reference of Related Applications

The present application claims the priority to Chinese Patent Application No. 202010010740.9, filed with the China National Intellectual Property Administration on January 6, 2020 and entitled "Information Transmission Method and Device", the entire content of which is hereby incorporated by reference. The present application claims the priority to Chinese Patent Application No. 202010014283.0, filed with the China National Intellectual Property Administration on January 7, 2020 and entitled "Information Transmission Method and Device", the entire content of which is hereby incorporated by reference.

### Field

The present application relates to the field of communication technologies, and particularly to an information transmission method and device.

### Background

For a dual-Universal Subscriber Identity Module (USIM) terminal (single-receive-single-transmit), when one of the USIM cards (such as USIM 1) is performing service, and when the terminal needs to use the other USIM card (such as USIM 2) to carry out other services for some reasons (such as other high-priority service requirements), the terminal will disconnect a network connection of the USIM 1 directly and use the USIM2 for services based on a current protocol standard. But this operation will affect the network serving the USIM1 and cause the resource waste, for example, the network may consider that a connection error has occurred and the user is unreachable, and this may affect the related timer, network indicator statistics, user usage statistics, etc. Moreover, since the network may continuously try to page the USIM1 for a certain period of time, the network resources are wasted.

### Brief Summary

Embodiments of the present application provide an information transmission method and device, so as to avoid the paging of the serving network for a USIM when the multi-USIM terminal leaves the serving network, thereby saving the network resources.

On the terminal side, an information transmission method provided by an embodiment of the present application includes:
sending an indication for entering a Mobile Initiated Connection Only (MICO) mode or a Power Saving Mode (PSM) to a network side when a multi-USIM terminal needs to leave a serving network for a USIM;
leaving the serving network for the USIM when receiving a confirmation from the network side for the indication.

Through this method, when the multi-USIM terminal needs to leave the serving network for a USIM, it sends an indication for entering the MICO mode or the PSM to the network side, and leaves the serving network for the USIM when receiving the confirmation from the network side for the indication, thereby avoiding the paging of the serving network for the USIM when the multi-USIM terminal leaves the serving network, and thus saving the network resources.

Optionally, the indication is sent by triggering a registration process to a 5th Generation mobile networks System (5GS) or an attaching, Tracking Area Update (TAU) or Routing Area Update (RAU) process to an Evolved Packet System (EPS).

Optionally, the terminal indicates to the network that the terminal must enter the MICO mode or the PSM mode immediately by setting an active time value to a specific value.

Optionally, the method further includes:
triggering a registration update, attach, TAU or RAU process to instruct the network to close the MICO mode or the PSM mode when the terminal needs to stay in the serving network for the USIM.

Optionally, the method further includes:
performing service transmission by closing the MICO mode, or transmitting Mobile Originated (MO) signaling and data initiated by the terminal directly in a 5th Generation mobile networks (5G) system.

Optionally, the method further includes:
performing service transmission by closing the PSM mode, or transmitting MO signaling and data initiated by the terminal directly in a 4th Generation mobile networks (4G) system.

On the network side, an information transmission method provided by an embodiment of the present application includes:
receiving an indication for entering an MICO mode or a PSM sent when a multi-USIM terminal needs to leave a serving network for a USIM;
sending a confirmation for the indication to the multi-USIM terminal.

Optionally, the method further includes:
sending an extended connected timer to a Radio Access Network (RAN) to maintain an N2 (an interface of the RAN to the access and mobility management function in the 5G core network) connection when the terminal is required to return to the serving network.

On the terminal side, an information transmission device provided by an embodiment of the present application includes:
a memory configured to store program instructions;
a processor configured to invoke the program instructions stored in the memory and execute according to an obtained program:
   sending an indication for entering an MICO mode or a PSM to a network side when a multi-USIM terminal needs to leave a serving network for a USIM;
   leaving the serving network for the USIM when receiving a confirmation from the network side for the indication.

Optionally, the processor sends the indication by triggering a registration process to a 5GS or an attach, TAU or RAU process to an EPS.

Optionally, the processor instructs the network that the terminal must enter the MICO mode or the PSM mode immediately by setting an active time value to a specific value.

Optionally, the processor is further configured to invoke the program instructions stored in the memory and execute according to an obtained program:
triggering a registration update, attach, TAU or RAU process to instruct the network to close the MICO mode or the PSM mode when the terminal needs to stay in the serving network for the USIM.

Optionally, the processor is further configured to invoke the program instructions stored in the memory and execute according to an obtained program:
performing service transmission by closing the MICO mode, or transmitting MO signaling and data initiated by the terminal directly in a 5G system.

Optionally, the processor is further configured to invoke the program instructions stored in the memory and execute according to an obtained program:
performing service transmission by closing the PSM mode, or transmitting MO signaling and data initiated by the terminal directly in a 4G system.

On the network side, an information transmission device provided by an embodiment of the present application includes:
a memory configured to store program instructions;
a processor configured to invoke the program instructions stored in the memory and execute according to an obtained program:
   receiving an indication for entering an MICO mode or a PSM sent when a multi-USIM terminal needs to leave a serving network for a USIM;
   sending a confirmation for the indication to the multi-USIM terminal.

Optionally, the processor is further configured to invoke the program instructions stored in the memory and execute according to an obtained program:
sending an extended connected timer to an RAN to maintain an N2 connection when the terminal is required to return to the serving network.

On the terminal side, another information transmission device provided by an embodiment of the present application includes:
a first unit configured to send an indication for entering an MICO mode or a PSM to a network side when a multi-USIM terminal needs to leave a serving network for a USIM;
a second unit configured to leave the serving network for the USIM when receiving a confirmation from the network side for the indication.

On the network side, another information transmission device provided by an embodiment of the present application includes:
a receiving unit configured to receive an indication for entering an MICO mode or a PSM sent when a multi-USIM terminal needs to leave a serving network for a USIM;
a sending unit configured to send a confirmation for the indication to the multi-USIM terminal.

Another embodiment of the present application provides a computing device, which includes a memory and a processor. The memory is configured to store the program instructions, and the processor is configured to invoke the program instructions stored in the memory and perform any one of the above-mentioned methods in accordance with the obtained program.

Another embodiment of the present application provides a computer storage medium storing the computer executable instructions which are configured to cause the computer to perform any one of the above-mentioned methods.

### Brief Description of the Drawings

In order to illustrate the technical solutions in the embodiments of the present application more clearly, the accompanying figures which need to be used in describing the embodiments will be introduced below briefly. Obviously the accompanying figures described below are only some embodiments of the present application, and other accompanying figures can also be obtained by those ordinary skilled in the art according to these accompanying figures without creative labor.
Fig. 1 is a schematic flowchart of an information transmission method on the terminal side according to an embodiment of the present application;
Fig. 2 is a schematic flowchart of an information transmission method on the network side according to an embodiment of the present application;
Fig. 3 is a structural schematic diagram of an information transmission device on the terminal side according to an embodiment of the present application;
Fig. 4 is a structural schematic diagram of an information transmission device on the network side according to an embodiment of the present application;
Fig. 5 is a structural schematic diagram of another information transmission device on the terminal side according to an embodiment of the present application;
Fig. 6 is a structural schematic diagram of another information transmission device on the network side according to an embodiment of the present application.

### Detailed Description of the Embodiments

The technical solutions in the embodiments of the present application will be described clearly and completely below in combination with the accompanying drawings in the embodiments of the present application. Obviously the described embodiments are only a part of the embodiments of the present application but not all the embodiments. Based upon the embodiments of the present application, all of other embodiments obtained by those ordinary skilled in the art without creative work pertain to the protection scope of the present application.

For a single-receive-single-transmit (Single Rx Single Tx) terminal that supports two USIM cards, the terminal cannot monitor the paging of the serving networks for the two USIM cards at the same time, and cannot send and receive data at the same time. Therefore, once the terminal leaves the serving network for a certain USIM card, the terminal will not respond to the paging of this network.

Embodiments of the present application provide an information transmission method and device, so as to avoid the paging of the serving network for a USIM when the multi-USIM terminal leaves the serving network, thereby saving the network resources.

Here, the method and device are based on the same application concept. Since the principle of solving the problem in the method is similar to that in the device, the implementations of the device and method can refer to each other, and the repeated description thereof will be omitted.

The technical solutions provided by the embodiments of the present application may be applicable to various systems, especially 5G systems. For example, the applicable systems may be: Global System of Mobile communication (GSM) system, Code Division Multiple Access (CDMA) system, Wideband Code Division Multiple Access (WCDMA) system, General Packet Radio Service (GPRS) system, Long Term Evolution (LTE) system, LTE Frequency Division Duplex (FDD) system, LTE Time Division Duplex (TDD) system, Universal Mobile Telecommunication System (UMTS), Worldwide interoperability for Microwave Access (WiMAX) system, 5G system, etc. These systems all include terminal devices and network devices.

The terminal device involved in the embodiments of the present application may be a device for providing the voice and/or data connectivity to the user, a handheld device with the wireless connection function, or other processing device connected to the wireless modem. In different systems, the terminal device may have different names. For example, in a 5G system, the terminal device may be referred to as User Equipment (UE). The wireless terminal device may communicate with one or more core networks via the RAN, and the wireless terminal device may be a mobile terminal, such as a mobile telephone (or called "cellular" telephone), and a computer with the mobile terminal, for example, may be a portable, pocket, handheld, computer built-in or vehicle-carried mobile device, and they exchange the voice and/or data with the RAN. For example, Personal Communication Service (PCS) telephone, cordless telephone, Session Initiation Protocol (SIP) telephone, Wireless Local Loop (WLL) station, Personal Digital Assistant (PDA) and other devices. The wireless terminal device may also be called system, subscriber unit, subscriber station, mobile station, mobile, remote station, access point, remote terminal, access terminal, user terminal, user agent, user device, which is not limited in the embodiments of the present application.

The network device involved in the embodiments of the present application may be a base station, which may include a plurality of cells. Depending on specific application scenarios, the base station may also be called access point, or may refer to a device in the access network communicating with the wireless terminal via one or more sectors over an air interface, or may have other names. The network device may be used to perform the inter-conversion between the received air frame and Internet Protocol (IP) packet, and used as the router between the wireless terminal device and the rest of the access network. The rest of the access network may include IP networks. The network device may further coordinate the attribute management of the air interface. For example, the network device involved in the embodiments of the present application can be a network device (Base Transceiver Station (BTS)) in the GSM system or CDMA system, or can be a network device (NodeB) in the WCDMA system, or can be an evolutional network device (evolutional Node B (eNB or e-NodeB)) in the LTE system, a 5G base station in the 5G network architecture (next generation system), or can be a Home evolved Node B (HeNB), a relay node, femto, pico, etc., which is not limited in the embodiments of the present application.

The embodiments of the present application will be described below in detail with reference to the drawings of the specification. It should be noted that the showing order of the embodiments of the present application only represents the sequential order of the embodiments, but does not represent the pros and cons of the technical solutions provided by the embodiments.

In the existing 3rd Generation Partnership Project (3GPP) standard, the network is allowed to provide the MICO mode to the terminal for the 5GS; and the network is allowed to provide the PSM mode to the terminal for the 4G system. For the terminal in the MICO or PSM mode, the network side will not take the initiative to page the terminal unless the terminal actively initiates a service or the related timer times out, and this mode is known to the network side, so the network side can process the related service process normally.

Based on this, in the embodiments of the present application, when a dual-USIM terminal needs to perform an off-grid operation on one of the USIMs, the terminal may negotiate with the network side to make it enter the MICO or PSM mode and then leave the network, thereby avoiding the network side's misjudgment on the connection state, the abnormal interruption of services, the waste of network resources, etc.

### Embodiments

### Embodiment 1.1: the terminal enables the MICO mode in the 5GS to leave the network (leaving).

When the terminal wants to temporarily leave the serving network for the current USIM, the terminal triggers the registration update process (mobility registration), or the initial/periodical registration request (if the terminal just needs to initiate these processes) carries the cell indicator of MICO mode preference, to indicate a desire to enter the MICO mode. Optionally, the indicator may carry a Requested Active Time value, which is set to 0, indicating that the MICO mode needs to be entered immediately.

If the network agrees that the terminal enters the MICO mode, the Access and Mobility Management Function (AMF) entity returns a registration accept message to the terminal. The registration accept message carries the accepted MICO mode indicator, that is, confirms that the terminal enters the MICO mode. Optionally, the registration accept message may carry an active time value and/or a strictly periodic registration timer to indicate the waiting time before the terminal enters the MICO mode and the maximum time length in which the terminal can stay in the MICO mode.

Optionally, if the AMF expects the terminal to be able to return to the network quickly (for example, the time length of the strictly periodic registration timer is relatively short), the AMF may set and retain the extended connected timer and send it to the 5G Next Generation Radio Access Network (NG-RAN) to reserve the N2 connection during this period.

After that, the terminal enters the MICO mode according to the result of the above negotiation with the network side. During this period, the network side considers that the terminal is unreachable, and processes the relevant service procedures according to the existing protocol regulations. If the terminal is in the Connection Management-connected (CM-connected) state before entering the MICO mode, the AMF will notify the RAN side to release the radio-side context ((R)AN context) of the terminal.

For the registration procedure described in the embodiments of the present application, reference may be made to the 3GPP Technical Specification (TS) 23.502, chapter 4.2.2.2.2. The above only describes the problem of how to deal with the MICO mode in the registration request step and the registration acceptance step, and involves no modifications to the existing networks and protocols. The other steps also keep the existing mechanism unchanged.

### Embodiment 1.2: the terminal enables the MICO mode resumption in the 5GS.

When the terminal wants to resume services for the USIM that has entered the MICO mode, the terminal may be triggered by one of the following conditions.

Condition 1: If the terminal needs to end the current MICO mode, the terminal needs to trigger the registration procedure and indicate that it does not enter the MICO mode in the MICO mode preference in the registration request.

Condition 2: The periodic registration timer times out, and at this time, the terminal needs to perform the periodic registration procedure. If the terminal needs to end the current MICO mode, the terminal indicates that it does not enter the MICO mode in the MICO mode preference in the registration request.

Condition 3: Waiting for the MO data initiated by the terminal means that the terminal needs to actively initiate the uplink data. At this time, the connection to the serving network for this USIM can be resumed according to the existing specification definition, for example, the terminal initiates the registration procedure (for example, due to the change of the registration area) during this process. If the terminal needs to end the current MICO mode, the terminal indicates that it does not enter the MICO mode in the MICO mode preference in the registration request.

Condition 4: Waiting for the MO signaling means that the terminal needs to actively initiate the uplink signaling. At this time, the connection of this USIM with the network can be resumed according to the existing specification definition, for example, the terminal initiates the registration procedure (for example, due to the change of the registration area) in this process. If the terminal needs to end the current MICO mode, the terminal indicates that it does not enter the MICO mode in the MICO mode preference in the registration request.

The registration procedure in 3GPPTS 23.502, chapter 4.2.2.2.2 mentioned in the above embodiment is also applicable to the scenario of the registration request when the terminal enables the MICO mode resumption in the 5GS. It is only necessary to not request to enter the MICO mode in the MICO mode preference in the registration request.

### Embodiment 2.1: the terminal starts the PSM mode leaving in the EPS.

When the terminal wants to temporarily leave the serving network for the current USIM, the terminal sends an attach request or TAU/RAU request message to the Mobility Management Entity (MME), where the element "active time value" is carried. The active time value is set to 0, to indicate a desire to enter the PSM mode immediately.

If the network agrees that the terminal enters the PSM mode, the MME returns an attach accept or TAU/RAU accept message to the terminal, and the active time value allocated by the network side to the terminal is carried, to indicate the waiting time before the terminal enters the PSM mode this time.

Then, according to the result of the above negotiation with the network side, the terminal enters the PSM mode when the waiting time is reached. During this period, the network side considers that the terminal is unreachable, and processes the relevant service procedures according to the existing protocol regulations. If the terminal is in the EPS Connection Management-connected (ECM-connected) state before entering the PSM mode, the AMF will notify the RAN side to release the (R)AN context of the terminal.

For the attach procedure described in the embodiment of the present application, reference may be made to the current 3GPP TS 23.401, chapter 5.3.2.1. The embodiment 2.1 only describes the problem of how to deal with the PSM mode in the attach request step and the attach accept step (Initial Context Setup Request or Downlink NAS transport with Attach Accept), and involves no modifications to the existing networks and protocols. The other steps also keep the existing mechanism unchanged.

The principle of the TAU/RAU procedure is the same as that of the attach procedure, that is, the terminal carries the active time value in a TAU/RAU request message to indicate that it wishes to enter the PSM mode. If the network agrees, the MME returns a TAU/RAU accept message to the terminal, and this message carries the newly allocated active time value. Similarly, no modifications to the existing networks and protocols are involved.

### Embodiment 2.2: the terminal enables the PSM mode resumption in the EPS.

When the terminal wants to resume services for the USIM that has entered the PSM mode, the terminal may be triggered by one of the following conditions.

Condition 1: The terminal settings are changed, so that the attach or TAU/RAU procedure needs to be re-initiated. If the terminal needs to end the current PSM mode, the attach or TAU/RAU request does not carry the active time value to indicate that the terminal does not enter the PSM mode.

Condition 2: The periodic TAU/RAU timer times out, and at this time, the terminal needs to perform the periodic TAU/RAU procedure. If the terminal needs to end the current PSM mode, the TAU/RAU request does not carry the active time value to indicate that the terminal does not enter the PSM mode.

Condition 3: Waiting for the MO data means that the terminal needs to actively initiate the uplink data. At this time, the connection of this USIM with the network can be resumed according to the existing specification definition, for example, the terminal initiates the attach or TAU/RAU procedure (for example, due to the change of the tracking area) during this process. If the terminal needs to end the current PSM mode, the attach or TAU/RAU request does not carry the active time value to indicate that the terminal does not enter the PSM mode.

Condition 4: Waiting for the MO signaling means that the terminal needs to actively initiate the uplink signaling. At this time, the connection of this USIM with the network can be resumed according to the existing specification definition, for example, the terminal initiates the attach or TAU/RAU procedure (for example, due to the change of the tracking area) during this process. If the terminal needs to end the current PSM mode, the attach or TAU/RAU request does not carry the active time value to indicate that the terminal does not enter the PSM mode.

The attach procedure described in the above Embodiment 2.1 is also applicable to the scenario of attach request when the terminal enables the PSM mode resumption in the EPS. It is just that the attach request does not carry the active time value to indicate that the terminal does not request to enter the PSM mode. The scenario of the TAU/RAU is the same as the attach procedure, and will not be repeated here.

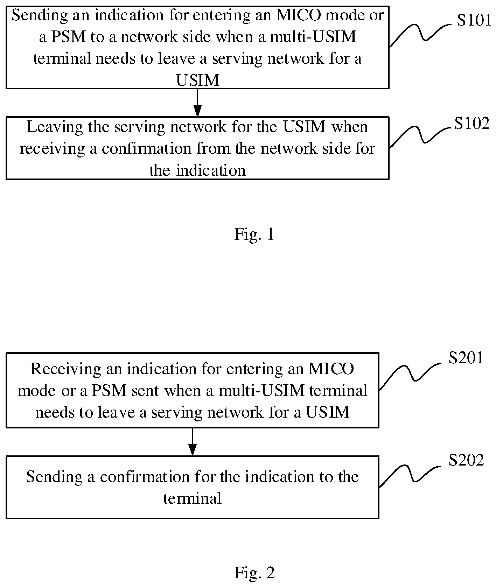

To sum up, referring to Fig. 1, on the terminal side, an information transmission method provided by an embodiment of the present application includes the following steps.

S101: sending an indication for entering an MICO mode or a PSM mode to a network side when a multi-USIM terminal needs to leave a serving network for a USIM.

S102: leaving the serving network for the USIM when receiving a confirmation from the network side for the indication.

Through this method, when the multi-USIM terminal needs to leave the serving network for a USIM, it sends an indication to enter the MICO mode or the PSM mode to the network side, and leaves the serving network for the USIM when receiving the confirmation from the network side for the indication, thereby avoiding the paging of the serving network for the USIM when the multi-USIM terminal leaves the serving network, and thus saving the network resources.

Optionally, when one of the USIM cards of the multi-USIM terminal (single-receive-single-transmit terminal) leaves the network and enters the MICO mode or PSM mode, the terminal does not close the signal transmit-receive system of the terminal for transmitting/receiving signaling or data, that is, keeps the transmit-receive function of the terminal, to meet the service requirements of other USIM cards.

Optionally, the indication is sent by triggering a registration process to a 5GS or an attach, TAU or RAU process to an EPS.

Optionally, the network is indicated that the terminal must enter the MICO mode or the PSM mode immediately by setting an active time value to a specific value. For example, the specific value may be 0, or any other value may be used, which is not limited in the embodiments of the present application.

Optionally, the method further includes:
triggering a registration update, attach, TAU or RAU process to indicate the network to close the MICO mode or the PSM mode when the terminal needs to stay in the serving network of the USIM. Here, "stay", for example, may be understood as staying in a new USIM serving network, or may be understood as restoring the USIM serving network that was left before.

Optionally, the method further includes:
performing service transmission by closing the MICO mode, or transmitting MO signaling and data initiated by the terminal directly in a 5G system.

Optionally, the method further includes:
performing service transmission by closing the PSM mode, or transmitting MO signaling and data initiated by the terminal directly in a 4G system.

Correspondingly, on the network side, referring to Fig. 2, an information transmission method provided by an embodiment of the present application includes the following steps.

S201: receiving an indication to enter an MICO mode or a PSM mode sent by a multi-USIM terminal when the multi-USIM terminal needs to leave a serving network for a USIM.

S202: sending a confirmation for the indication to the multi-USIM terminal.

Optionally, the method further includes:
sending an extended connected timer to an RAN to maintain an N2 connection when the terminal is required to return to the serving network.

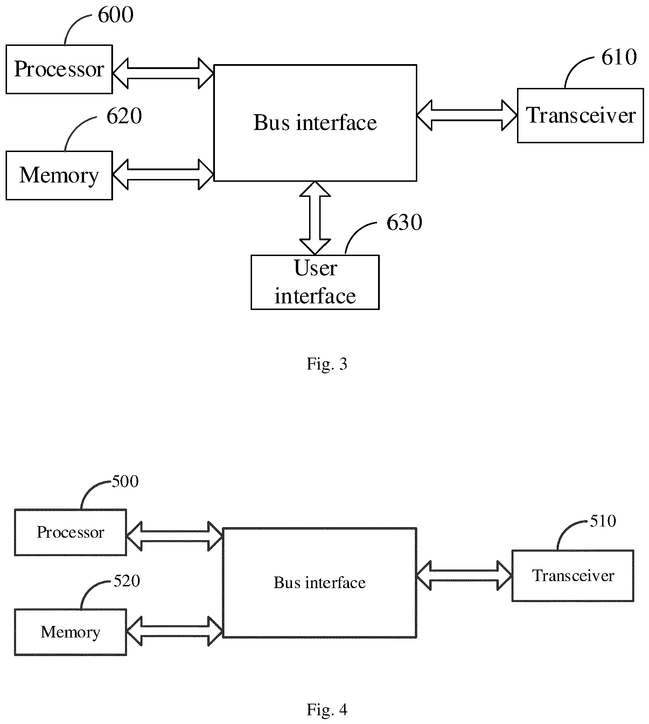

On the terminal side, referring to Fig. 3, an information transmission device provided by an embodiment of the present application includes:
a memory 620 configured to store program instructions;
a processor 600 configured to invoke the program instructions stored in the memory, and execute according to an obtained program:
   sending an indication to enter an MICO mode or a PSM mode to a network side when a multi-USIM terminal needs to leave a serving network for a USIM;
   leaving the serving network for the USIM when receiving a confirmation from the network side for the indication.

Optionally, the processor 600 sends the indication by triggering a registration process to a 5GS or an attach, TAU or RAU process to an EPS.

Optionally, the processor 600 indicates the network that the terminal must enter the MICO mode or the PSM mode immediately by setting an active time value to a specific value.

Optionally, the processor 600 is further configured to invoke the program instructions stored in the memory and execute according to an obtained program:
triggering a registration update, attach, TAU or RAU process to indicate the network to close the MICO mode or the PSM mode when the terminal needs to stay in the serving network for the USIM.

Optionally, the processor 600 is further configured to invoke the program instructions stored in the memory and execute according to an obtained program:
performing service transmission by closing the MICO mode, or transmitting MO signaling and data initiated by the terminal directly in a 5G system.

Optionally, the processor 600 is further configured to invoke the program instructions stored in the memory and execute according to an obtained program:
performing service transmission by closing the PSM mode, or transmitting MO signaling and data initiated by the terminal directly in a 4G system.

A transceiver 610 is configured to receive and send the data under the control of the processor 600.

Here, in Fig. 3, the bus architecture may include any numbers of interconnected buses and bridges, and specifically link various circuits of one or more processors represented by the processor 600 and the memory represented by the memory 620. The bus architecture may further link various other circuits such as peripheral device, voltage regulator and power management circuit, which are all well known in the art and thus will not be further described again herein. The bus interface provides an interface. The transceiver 610 may be a plurality of elements, i.e., include a transmitter and a receiver, and provide the units for communicating with various other devices over the transmission media. For different user equipments, the user interface 630 may be an interface capable of inter-connecting or exter-connecting with the required devices, and the connected devices include but not limited to keypad, display, loudspeaker, microphone, joystick, etc.

The processor 600 is responsible for managing the bus architecture and general processing, and the memory 620 may store data used by the processor 600 when performing the operations.

Optionally, the processor 600 may be Central Processing Unit (CPU), Application Specific Integrated Circuit (ASIC), Field-Programmable Gate Array (FPGA) or Complex Programmable Logic Device (CPLD).

On the network side, referring to Fig. 4, an information transmission device provided by an embodiment of the present application includes:
a memory 520 configured to store program instructions;
a processor 500 configured to invoke the program instructions stored in the memory, and execute according to an obtained program:
   receiving an indication to enter an MICO mode or a PSM mode sent by a multi-USIM terminal when the multi-USIM terminal needs to leave a serving network for a USIM;
   sending a confirmation for the indication to the multi-USIM terminal.

Optionally, the processor 500 is further configured to invoke the program instructions stored in the memory and execute according to an obtained program:
sending an extended connected timer to an RAN to maintain an N2 connection when the terminal is required to return to the serving network.

A transceiver 510 is configured to receive and send the data under the control of the processor 500.

Here, in Fig. 4, the bus architecture may include any numbers of interconnected buses and bridges, and specifically link various circuits of one or more processors represented by the processor 500 and the memory represented by the memory 520. The bus architecture may further link various other circuits such as peripheral device, voltage regulator and power management circuit, which are all well known in the art and thus will not be further described again herein. The bus interface provides an interface. The transceiver 510 may be a plurality of elements, i.e., include a transmitter and a receiver, and provide the units for communicating with various other devices over the transmission media. The processor 500 is responsible for managing the bus architecture and general processing, and the memory 520 may store the data used by the processor 500 when performing the operations.

The processor 500 may be Central Processing Unit (CPU), Application Specific Integrated Circuit (ASIC), Field-Programmable Gate Array (FPGA) or Complex Programmable Logic Device (CPLD).

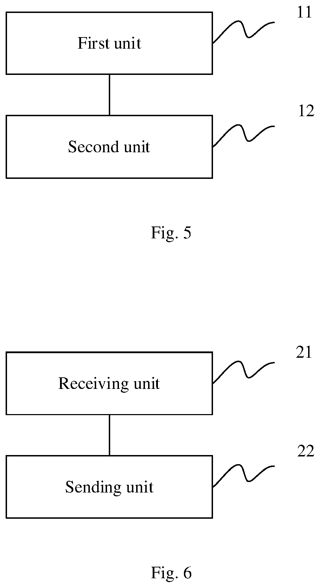

On the terminal side, referring to Fig. 5, another information transmission device provided by an embodiment of the present application includes:
a first unit 11 configured to send an indication to enter an MICO mode or a PSM mode to a network side when a multi-USIM terminal needs to leave a serving network for a USIM;
a second unit 12 configured to leave the serving network for the USIM when receiving a confirmation from the network side for the indication.

On the network side, referring to Fig. 6, another information transmission device provided by an embodiment of the present application includes:
a receiving unit 21 configured to receive an indication to enter an MICO mode or a PSM mode sent by a multi-USIM terminal when the multi-USIM needs to leave a serving network for a USIM;
a sending unit 22 configured to send a confirmation for the indication to the terminal.

It should be noted that the division of units in the embodiments of the present application is illustrative, and is merely a kind of logical function division, and there may be other division methods in actual implementations. In addition, the functional units in each embodiment of the present application may be integrated into one processing unit, or each unit may exist alone physically, or two or more units may be integrated into one unit. The above-mentioned integrated units can be implemented in the form of hardware, or can be implemented in the form of software functional units.

When the integrated unit is implemented in the form of software functional unit and sold or used as an independent product, it may be stored in a computer readable storage medium. Based on such understanding, the technical solution of the present application essentially or a part of technical solution that contributes to the prior art or all or a part of the technical solution may be embodied in the form of software product. The computer software product is stored in a storage medium, and includes several instructions used to enable a computer device (which may be a personal computer, server, or network device, etc.) or a processor to perform all or some of the steps of the methods of various embodiments of the present application. The above-mentioned storage medium includes: USB flash drive, mobile hard disk, Read-Only Memory (ROM), Random Access Memory (RAM), magnetic disk or compact disc or various media that can store the program codes.

Embodiments of the present application provide a computing device, which may specifically be a desktop computer, a portable computer, a smart phone, a tablet computer, a PDA, etc. The computing device can include a Center Processing Unit (CPU), a memory, input/output devices and the like. The input device can include a keyboard, a mouse, a touch screen and the like, and the output device can include a display device such as Liquid Crystal Display (LCD), Cathode Ray Tube (CRT) or the like.

The memory can include a Read-Only Memory (ROM) and a Random Access Memory (RAM), and provide the program instructions and data stored in the memory to the processor. In embodiments of the present application, the memory may be used to store the program of any one of the methods provided by the embodiments of the present application.

The processor invokes the program instructions stored in the memory and is configured to perform any one of the methods provided by the embodiments of the present application in accordance with the obtained program instructions.

Embodiments of the present application provide a computer storage medium for storing the computer program instructions used by the devices provided by the embodiments of the present application described above, where the computer storage medium contains the program for performing any one of the methods provided by the embodiments of the present application described above.

The computer storage medium may be any available media or data storage device accessible to the computer, including but not limited to magnetic memory (e.g., floppy disk, hard disk, magnetic tape, Magnetic Optical disc (MO) or the like), optical memory (e.g., CD, DVD, BD, HVD or the like), semiconductor memory (e.g., ROM, EPROM, EEPROM, nonvolatile memory (NAND FLASH), Solid State Disk (SSD)) or the like.

The methods provided by the embodiments of the present application may be applied to the terminal devices, and may also be applied to the network devices.

Here, the terminal device may also be referred to as user equipment, MS, mobile terminal, etc. Optionally, the terminal may has the ability of communicating with one or more core networks via the RAN. For example, the terminal may be a mobile telephone (or called "cellular" telephone) or a computer with the mobile property, etc. For example, the terminal may also be a portable, pocket, handheld, computer built-in or vehicle-carried mobile device.

The network device may be a base station (e.g., access point), i.e., a device in the access network communicating with the wireless terminal via one or more sectors over the air interface. The base station may be used to perform the inter-conversion between the received air frame and the IP packet, and used as the router between the wireless terminal and the rest of the access network. The rest of the access network may include Internet Protocol (IP) networks. The base station may further coordinate the attribute management of the air interface. For example, the base station can be the BTS in the GSM or CDMA, or can be the NodeB in the WCDMA, or can be the NodeB or eNB or e-NodeB (evolutional Node B) in the LTE, or can be the gNB in the 5G system, or the like, which is not limited in the embodiments of the present application.

The processing flows of the above methods may be implemented by a software program, which may be stored in a storage medium. When the stored software program is invoked, the above method steps are performed.

To sum up, in the embodiments of the present application, for a dual-USIM (single-transmt-single-receive) terminal, when the terminal needs to temporarily leave the serving network for a USIM, it triggers the registration process to the 5GS or the attach/TAU/RAU process to the EPS and indicates the network that it enters the MICO mode or the PSM mode; and the terminal leaves the serving network for the USIM after receiving the confirmation from the network.

Here, optionally, the terminal may ask the network to agree the terminal to enter the MICO mode or PSM mode immediately by setting the active time value to 0.

For the dual-USIM terminal (single-transmit-single-receive), when the terminal needs to restore the serving network for a USIM, it triggers the registration update or attach/TAU/RAU process to close the MICO or PSM mode.

In the 5G system, the terminal may perform service transmission by closing the MICO mode or transmit MO signaling and data directly; in the 4G system, the terminal may perform service transmission by closing the PSM mode or transmit MO signaling and data directly.

The embodiments of the present application can be extended to the multi-USIM terminal, and the above method can be used to implement off-grid after negotiating with the network side as long as the terminal cannot transmit and receive services for all USIMs at the same time.

When the AMF or MME expects the terminal to return to the serving network quickly, it may send the extended connected timer to the RAN to maintain the N2 connection.

The technical solutions provided by the embodiments of the present application utilize the existing 3GPP technical means with no need to transform the existing network nor to upgrade the protocols, interfaces, etc. There is only a need to upgrade the software or hardware of the relevant terminals, to achieve the negotiation with the network before off-grid and achieve off-grid after starting the MICO or PSM mode, which is less difficult to implement and friendly to equipment vendors and operators.

When the terminal wants to restore the service of a USIM, since the network side knows the state of the terminal and may still retain the relevant connection, the service may be restored without further negotiation, and the MO signaling and service may be sent directly, reducing the service time delay.

It should be understood by those skilled in the art that the embodiments of the present application can provide methods, systems and computer program products. Thus the present application can take the form of hardware embodiments alone, software embodiments alone, or embodiments combining the software and hardware aspects. Also the present application can take the form of computer program products implemented on one or more computer usable storage mediums (including but not limited to magnetic disk memories, optical memories and the like) containing computer usable program codes therein.

The present application is described by reference to the flow charts and/or the block diagrams of the methods, the devices (systems) and the computer program products according to the embodiments of the present application. It should be understood that each process and/or block in the flow charts and/or the block diagrams, and a combination of processes and/or blocks in the flow charts and/or the block diagrams can be implemented by the computer program instructions. These computer program instructions can be provided to a general-purpose computer, a dedicated computer, an embedded processor, or a processor of another programmable data processing device to produce a machine, so that an apparatus for implementing the functions specified in one or more processes of the flow charts and/or one or more blocks of the block diagrams is produced by the instructions executed by the computer or the processor of another programmable data processing device.

These computer program instructions can also be stored in a computer readable memory which is capable of guiding the computer or another programmable data processing device to operate in a particular way, so that the instructions stored in the computer readable memory produce a manufacture including the instruction apparatus which implements the functions specified in one or more processes of the flow charts and/or one or more blocks of the block diagrams.

These computer program instructions can also be loaded onto the computer or another programmable data processing device, so that a series of operation steps are performed on the computer or another programmable device to produce the computer-implemented processing. Thus the instructions executed on the computer or another programmable device provide steps for implementing the functions specified in one or more processes of the flow charts and/or one or more blocks of the block diagrams.

Evidently those skilled in the art can make various modifications and variations to the present application without departing from the spirit and scope of the present application. Thus the present application is also intended to encompass these modifications and variations therein as long as these modifications and variations to the present application come into the scope of the claims of the present application and their equivalents.

## Claims

1. An information transmission method, comprising:
sending, by a multi-Universal Subscriber Identity Module, USIM, terminal, an indication for entering a Mobile Initiated Connection Only, MICO, mode or a Power Saving Mode, PSM, to a network side, when the multi-USIM terminal needs to leave a serving network for a USIM;
leaving, by the multi-USIM terminal, the serving network for the USIM, when the multi-USIM terminal receives a confirmation from the network side for the indication.

2. The method according to claim 1, wherein the indication is sent by triggering:
a registration process to a 5th Generation mobile networks System, 5GS, or
an attaching, Tracking Area Update, TAU, or Routing Area Update, RAU, process to an Evolved Packet System, EPS.

3. The method according to claim 1, wherein the multi-USIM terminal indicates to the network side that the USIM terminal must enter the MICO mode or the PSM immediately by setting an active time value to a specific value.

4. The method according to claim 1, further comprising:
triggering a registration update, attach, TAU or RAU process to instruct the network side to close the MICO mode or the PSM, when the multi-USIM terminal needs to stay in the serving network for the USIM.

5. The method according to claim 1, further comprising in a 5th Generation mobile networks, 5G, system:
performing service transmission by closing the MICO mode, or
transmitting MO signaling and data initiated by the multi-USIM terminal directly.

6. The method according to claim 1, further comprising in a 4th Generation mobile networks, 4G, system:
performing service transmission by closing the PSM mode, or
transmitting MO signaling and data initiated by the terminal directly.

7. An information transmission method, comprising:
receiving an indication for entering an MICO mode or a PSM sent by a multi-USIM terminal, when the multi-USIM terminal needs to leave a serving network for a USIM;
sending a confirmation for the indication to the multi-USIM terminal.

8. The method according to claim 7, further comprising:
sending an extended connected timer to a Radio Access Network, RAN, to maintain an N2 connection, when the multi-USIM terminal is required to return to the serving network.

9. An information transmission device, comprising:
a memory configured to store program instructions;
a processor configured to invoke the program instructions stored in the memory and perform according to an obtained program:
sending an indication for entering an MICO mode or a PSM to a network side when a multi-USIM terminal needs to leave a serving network for a USIM;
leaving the serving network for the USIM when receiving a confirmation from the network side for the indication.

10. The device according to claim 9, wherein the processor performs sending the indication by triggering:
registration process to a 5GS, or
an attach, TAU or RAU process to an EPS.

11. The device according to claim 9, wherein the processor performs indicating to the network side that the multi-USIM terminal must enter the MICO mode or the PSM immediately by setting an active time value to a specific value.

12. The device according to claim 9, wherein the processor is further configured to invoke the program instructions stored in the memory and perform according to an obtained program:
triggering a registration update, attach, TAU or RAU process to instruct the network to close the MICO mode or the PSM mode when the multi-USIM terminal needs to stay in the serving network for the USIM.

13. The device according to claim 9, wherein the processor is further configured to invoke the program instructions stored in the memory and perform in a 5G system according to an obtained program:
performing service transmission by closing the MICO mode, or
transmitting MO signaling and data initiated by the terminal directly.

14. The device according to claim 9, wherein the processor is further configured to invoke the program instructions stored in the memory and perform in a 4G system according to an obtained program:
performing service transmission by closing the PSM mode, or
transmitting MO signaling and data initiated by the terminal directly.

15. An information transmission device, comprising:
a memory configured to store program instructions;
a processor configured to invoke the program instructions stored in the memory and perform according to an obtained program:
receiving an indication for entering an MICO mode or a PSM sent when a multi-USIM terminal needs to leave a serving network for a USIM;
sending a confirmation for the indication to the multi-USIM terminal.

16. The device according to claim 15, wherein the processor is further configured to invoke the program instructions stored in the memory and perform according to an obtained program:
sending an extended connected timer to an RAN to maintain an N2 connection when the multi-USIM terminal is required to return to the serving network.

17. An information transmission device, comprising:
a first unit configured to send an indication for entering an MICO mode or a PSM to a network side when a multi-USIM terminal needs to leave a serving network for a USIM;
a second unit configured to leave the serving network for the USIM when receiving a confirmation from the network side for the indication.

18. The device according to claim 17, wherein the first unit sends the indication by triggering a registration process to a 5GS or an attach, TAU or RAU process to an EPS.

19. The device according to claim 17, wherein the first unit indicates to the network that the multi-USIM terminal must enter the MICO mode or the PSM immediately by setting an active time value to a specific value.

20. The device according to claim 17, wherein the first unit is further configured to:
trigger a registration update, attach, TAU or RAU process to instruct the network to close the MICO mode or the PSM mode when the multi-USIM terminal needs to stay in the serving network for the USIM.

21. The device according to claim 17, wherein the second unit is further configured to in a 5G system:
perform service transmission by closing the MICO mode, or
transmit MO signaling and data initiated by the terminal directly.

22. The device according to claim 17, wherein the second unit is further configured to in a 4G system:
perform service transmission by closing the PSM mode, or
transmit MO signaling and data initiated by the terminal directly.

23. An information transmission device, comprising:
a receiving unit configured to receive an indication for enteringr an MICO mode or a PSM sent when a multi-USIM terminal needs to leave a serving network for a USIM;
a sending unit configured to send a confirmation for the indication to the multi-USIM terminal.

24. The device according to claim 23, wherein the sending unit is further configured to:
send an extended connected timer to a Radio Access Network, RAN, to maintain an N2 connection when the multi-USIM terminal is required to return to the serving network.

25. A computer storage medium, wherein the computer storage medium stores computer executable instructions which are configured to cause a computer to perform the method of any one of claims 1 to 8.
